# EUROPÄISCHE PATENTANMELDUNG

(11) **EP 1 239 572 A2**
(43) Veröffentlichungstag der Anmeldung: **11.09.2002**
(21) Anmeldenummer: 02001760.4
(22) Anmeldetag: 25.01.2002
(51) Int. Cl.: H02K 49/10

(54) **Vorrichtung zur berührungslosen Übertragung von Drehbewegungen**

(30) Priorität: 10.03.2001 DE 10111616
(71) Anmelder: Pierburg GmbH, 41460 Neuss (DE)
(72) Erfinder: Bürger, Frank, 52355 Düren (DE); Ludwig, Norbert, 41379 Brüggen (DE)
(74) Vertreter: Dietrich, Barbara

(57) **Zusammenfassung**

Die Erfindung betrifft eine Vorrichtung zur berührungslosen Übertragung von Drehund/oder Drehantriebsbewegungen.

Bekannte berührungslos arbeitende Vorrichtungen weisen magnetische Kupplungen auf, die durch eine antriebsseitige sowie eine abtriebsseitige Magnetkupplung gebildet werden. Dabei sind mehrere einzelne Permanentmagnete mit einer Nord- und Südpolung in einem zylindrischen Gehäuse untergebracht, wobei diese abwechselnd einmal nach oben oder nach unten weisen. Beide Magnetkupplungen werden im Gebrauch so aufeinander ausgerichtet, daß die Nordpole N der antriebsseitigen Magnetkupplung mit den Südpolen S der abtriebseitigen Magnetkupplung zusammenwirken und umgekehrt.

Die vorliegende Lösung sieht vor, eine Vorrichtung (1) zur berührungslosen Übertragung von Drehbewegungen durch zwei segmentartig polarisierte Magnete (M1, M2) aufzubauen, die stirnseitig zueinander weisen und miteinander wirken. Dazu sind die Magnete (M1, M2) an zueinander weisenden Enden (3.1, 4.1, 9.1 10.1) der die Drehbewegungen übertragenden bzw. aufnehmenden Mittel (3, 4, 9, 10) direkt angebracht. Dies kann über eine Verklebung oder eine Verschraubung oder ein ähnliches Verfahren erfolgen.

## Beschreibung

Die Erfindung betrifft eine Vorrichtung zur berührungslosen Übertragung Drehbewegungen nach dem Oberbegriff des Patentanspruchs 1, wobei unter Drehbewegungen auch Drehantriebsbewegungen verstanden werden.

Die DE 198 26 065 A 1 offenbart eine Magnetkupplung für eine Pipettiervorrichtung, durch die ein Oberteil, das eine Kolbenstelleinrichtung aufweist, mit einem Unterteil, das mindestens eine Kolben-Zylinder-Einheit zum Pipettieren von Flüssigkeiten aufweist, lösbar verbunden ist, wodurch das Unterteil leicht und schnell ausgetauscht werden kann. Die Magnetkupplung fungiert hierbei nur als Halterung des Unterteils mit dem Oberteil.

Des weiteren offenbart auch die DE 198 08 450 A 1 eine Magnetkupplung, die eine schnell lösbare Verbindung zwischen einem Werkzeughalter und einer Antriebseinheit ermöglicht. Das einsteckende Kupplungsteil wird dabei durch mehrere gleichmäßig um die Halterachse herum angeordnete, zylindrische Permanentmagnete axial festgehalten. Die Drehantriebsübertagung selbst erfolgt über eine durch die Magnetkupplung im Werkzeughalter gehaltene Welle.

Aus der DE 41 104 88 A 1 ist eine Magnetkupplung für eine Umwälzpumpe für das Kühlwasser eines Kraftfahrzeuges bekannt, bei der das Pumpenrad über die Magnetkupplung angetrieben wird, wobei ein angetriebener Magnet innerhalb eines topfförmigen Gehäuses angeordnet ist und ein antreibender Magnet um das topfförmige Gehäuse herumläuft.

Eine gattungsnahe Vorrichtung ist der DE 195 42 048 A 1 entnehmbar. Die magnetische Kupplung wird hierbei durch eine antriebsseitige sowie eine abtriebsseitige Magnetkupplung gebildet. Dabei sind mehrere einzelne Permanentmagnete mit einer Nord- und Südpolung in einem zylindrischen Gehäuse untergebracht, wobei diese abwechselnd einmal nach oben oder nach unten weisen. Beide Magnetkupplungen werden im Gebrauch so aufeinander ausgerichtet, daß die Nordpole N der antriebsseitigen Magnetkupplung mit den Südpolen S der abtriebseitigen Magnetkupplung zusammenwirken und umgekehrt.

Die Aufgabe der Erfindung besteht darin, eine Vorrichtung der gattungsgemäßen Art anzugeben, die einen einfacheren Aufbau aufweist.

Gelöst wird die Aufgabe durch die Merkmale des Patentanspruchs 1.

Der Erfindung liegt die Idee zugrunde, die Vorrichtung durch zwei segmentartig polarisierte Magnete aufzubauen, die stirnseitig zueinander weisen und miteinander wirken. Dazu sind die Magnete an zueinander weisenden Enden der die Drehund/oder Drehantriebsbewegungen übertragenden bzw. aufnehmenden Mittel direkt angebracht. Dies kann über eine Verklebung oder eine Verschraubung oder ein ähnliches Verfahren erfolgen.

In einer besonderen Ausführung sind die beiden Magnete nur in ihren stirnseitigen Bereichen polarisiert, so daß rückseitig eine magnetische Rückkopplung bzw. ein magnetischer Einfluß auf andere Bauteile bzw. Bauelemente hinter den Magneten vermieden wird. Dies hat den Vorteil, daß weitere Bauteile, beispielsweise eine Sensorik, in direkter Nähe zu den Magneten angebracht werden können, ohne daß deren Funktion beeinflußt wird. Dies ermöglicht des weiteren eine kompakte Bauweise der Vorrichtung mit weiteren Bauelementen/ Bauteilen .

Derartige Vorrichtungen finden neben den bereits in der Beschreibungseinleitung aufgezählten Anwendungsgebieten auch in Kraftfahrzeugen zur Drosselklappenverstellung einer Brennkraftmaschine Anwendung. Dabei wird einerseits über die magnetische Kupplung die Drosselklappe berührungslos verstellt und andererseits die die Verstellung sensierende Sensorik von der Drosselklappe selbst mechanisch entkoppelt. Durch diese Abkopplung arbeitet das Sensorsystem bzw. die Sensorik tolleranzenneutral und ist, bezogen auf ein axiales Wellenspiel der Drosselklappe, gegen dieses Spiel immun. Neben der allgemeinen bekannten staubund abriebfreien Drehbewegungsübertragung ist die Sensorik durch diese Maßnahme zudem gegenüber bekannten Anordnungen meßgenauer.

Zwischen den beiden Magneten können sich ein Luftspalt oder auch ein Kunststoff befinden. Eine Anordnung der Magnete in separaten Gehäusen ist auch möglich.

Ein weiterer Vorteil der erfinderischen Idee liegt darin, daß ein Magnet der Vorrichtung zusammen mit der Sensorik und weiteren funktionsnotwendigen Bauelementen/Bauteilen in einem gemeinsamen Gehäuse untergebracht werden und dies als Modul ausgeführt werden kann. Dies erhöht neben der Servicefreundlichkeit auch die Reparaturfreundlichkeit durch schnelle Auswechselbarkeit des Moduls.

Die Magnete sind in einer Weiterführung der erfindungsgemäßen Idee als Ringmagnete ausgeführt und dabei entweder auf den stirnseitigen, zueinander weisenden Enden der Wellen aufgeklebt oder an ihnen verschraubt.

Die Sensorik selbst kann als ein Potentiometer mit einem Schleiferabgriff, ein Magnet mit einem magnetfeldsensiven Sensor, beispielsweise einem Hall-Sensor oder Hall-Schalter, usw. ausgeführt sein.

Anhand eines Ausführungsbeispieles mit Zeichnung soll die Erfindung näher erläutert werden, wobei die Beschreibung und die Ansprüche zahlreiche Merkmale in Kombination enthalten, die der Fachmann zweckmäßiger Weise auch einzeln betrachten und zu sinnvollen weiteren Kombinationen zusammenfassen wird.

Es zeigt
- Figur 1: eine Darstellung der erfindungsgemäßen Vorrichtung,
- Figur 2: eine Segmentierung der Magnete aus Figur 1,
- Figur 3: eine Variante der erfindungsgemäßen Vorrichtung aus Figur 1,
- Figur 4: ein praktisches Anwendungsbeispiel für die Vorrichtung,
- Figur 5: einen modulartigen Aufbau der erfindungsgemäßen Vorrichtung.

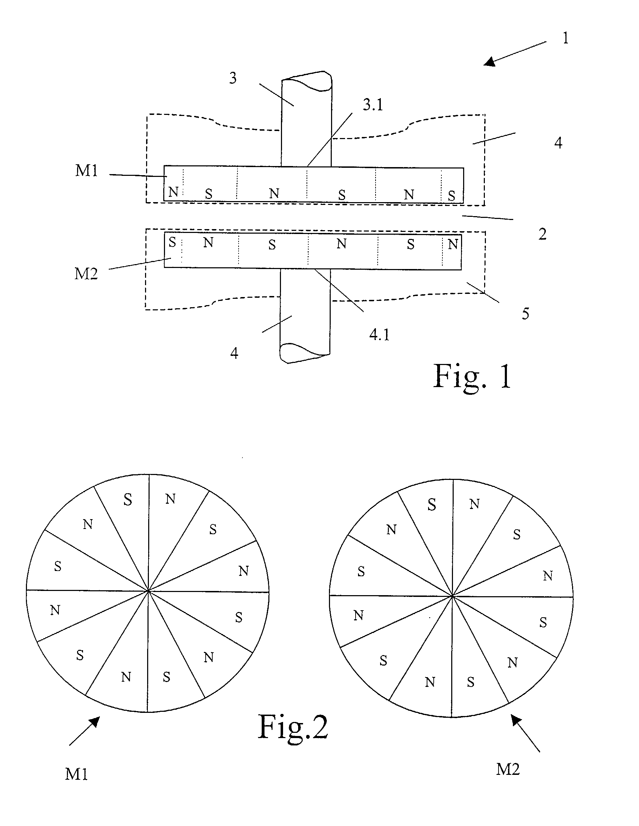

In Figur 1 ist der allgemeine Aufbau der erfindungsgemäßen Vorrichtung zur berührungslosen Übertragung von Dreh- und/oder Drehantriebsbewegungen (Drehbewegungen) aufgezeigt, die mit 1 gekennzeichnet ist. Die Vorrichtung 1 weist zwei Kupplungsglieder in Form von zwei Magneten M 1 und M 2 auf, die voneinander durch einen Spalt 2 beabstandet und jeweils auf einem, die Drehbewegung übertragenden/aufnehmenden Mittel 3, 4 am oberen Ende 3.1, 4.1 befestigt sind. Dabei weisen diese Enden 3.1, 4.1 stirnseitig zueinander. Die Magnete M 1, M 2 weisen Polsegmente S, N auf, die sich abwechseln. Beide Magnete M 1, M 2 sind zueinander derartig ausgerichtet, daß ein N-Segment des Magneten M 1 sich gegenüberliegend einem S-Segment des Magneten M 2 befindet. Durch diese Anordnung wird eine Mitnahme des Magneten M 2 bei Drehverstellung des Magneten M 1 (oder umgekehrt) gewährleistet. Dabei können der Magnet M 1 als auch der Magnet M 2 jeweils in einem separaten Gehäuse 5 oder 6 untergebracht sein.

Eine mögliche Segmentierung der Magnete M 1, M 2 aus Figur 1 ist in Figur 2 dargestellt, wobei diese Darstellung eine Draufsicht auf den einzelnen Magneten M1, M2 aus der Sicht des Spaltes2 unabhängig weiterer noch auszuführender Varianten ist.

Je mehr Segmente ein Magnet M 1, M 2 aufweist, desto schlupffreier und genauer arbeitet die Vorrichtung 1.
Die Größe der Magnete M 1, M 2 sowie deren Volumen ist abhängig vom Magnetmaterial und der aufzuwenden Drehverstellkraft zwischen dem Magneten M1 und dem Magneten M2.
Bekanntlich weist Neodym eine hohe magnetische Energiedichte auf, die bei der kraftlosen Drehübertragung von Vorteil ist, so daß sich dieses Material als Magnetmaterial anbietet.
Je leichter die mit dem Magneten M2 zu verdrehende Masse ist, desto geringer kann die Energiedichte im Material oder aber das Volumen des Magneten M1, M2 geringer gewählt werden. In diesen Fällen können die Magnete M 1, M 2 beispielsweise auch als Ringmagnete mit einem Innenloch ausgeführt sein.

Es versteht sich, daß der Spalt 2 nur so groß ausgeführt sein kann, daß es trotzdem möglich ist, daß die beiden magnetischen Kupplungsglieder M 1, M 2 miteinander wirken.

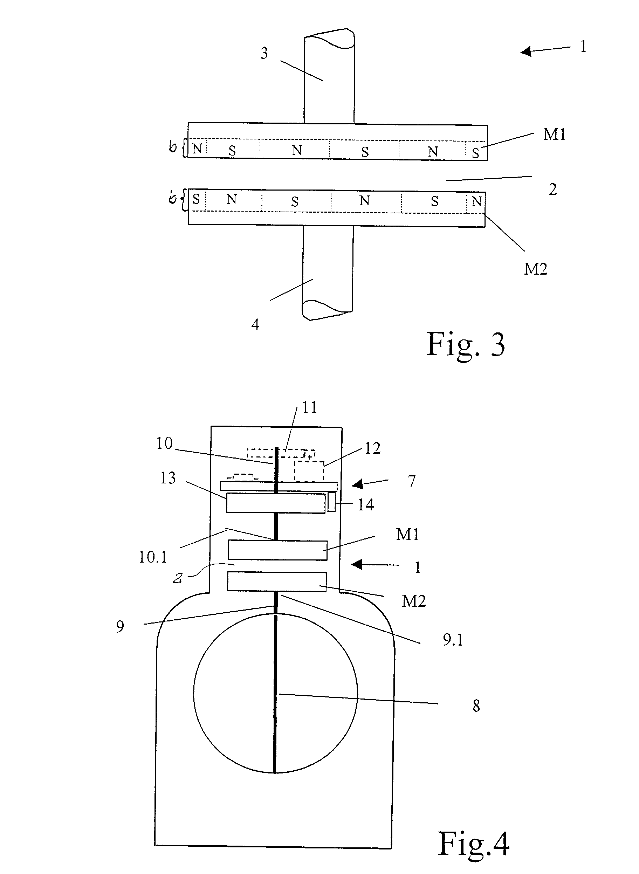

In Figur 3 ist eine Variante aus Figur 1 dargestellt.

Hierbei sind die Magnete M 1, M 2 nur in ihrem Stirnbereich b segmentiert polarisiert. Im rückseitigen Bereich der Magnete M 1, M 2 treten dadurch keine magnetischen Feldlinien aus.
Diesen Vorteil nutzend, kann beispielsweise eine Sensorik 7 sich auch in unmittelbarer Nähe der Magnete M 1, M 2 befindet, wie u.a. auch in Figur 4 dargestellt.

Figur 4 zeigt einen Einsatz der Vorrichtung 1, hier zur Verstellung einer Drosselklappe 8 einer nicht näher dargestellten Brennkraftmaschine.
Die Drosselklappe 8 ist über eine Welle 9, an der sich am stirnseitigen Ende 9.1 der Magnet M 2 der Vorrichtung 1 befindet, über den Magneten M1 mit einer weiteren Welle 10 berührungslos gekoppelt, wobei sich der Magnet M1 am stirnseitigen Ende 10.1 der Welle 10 befindet. Auf der Welle 10 angeflanscht ist beispielsweise ein Zahnrad 11, welches über einen Motor 12 zur Verstellung der Drosselklappe 8 angetrieben wird.
In bekannter Art und Weise erhält der Motor 12 ein Signal zur Verstellung der Drosselklappe 8, die über die Vorrichtung 1 auf die Drosselklappe 8 berührungslos übertragen wird. Gleichzeitig mit der Drehverstellung der Welle 10 wird ein auf der Welle 10 angebrachter Magnet 13 einer Sensorik 7 gegenüber einem Sensor 14 der Sensorik 7 mit verstellt. Über diese Sensorik 7 wird in bekannter Art und Weise die Verstellung in die geforderte Drosselklappenstellung ermittelt und ausgewertet, wobei in Auswertung dann beispielsweise ein Signal an den Motor 12 zum Abschalten gegeben wird.

Bei Nutzung der in Figur 3 angegebenen Variante kann die Sensorik 7 vorzugsweise in direkter Nähe zum Magneten M 1 angebracht werden, da dieser keinen magnetischen Einfluß und damit auf die Meßgenauigkeit der Sensorik 7 hat.

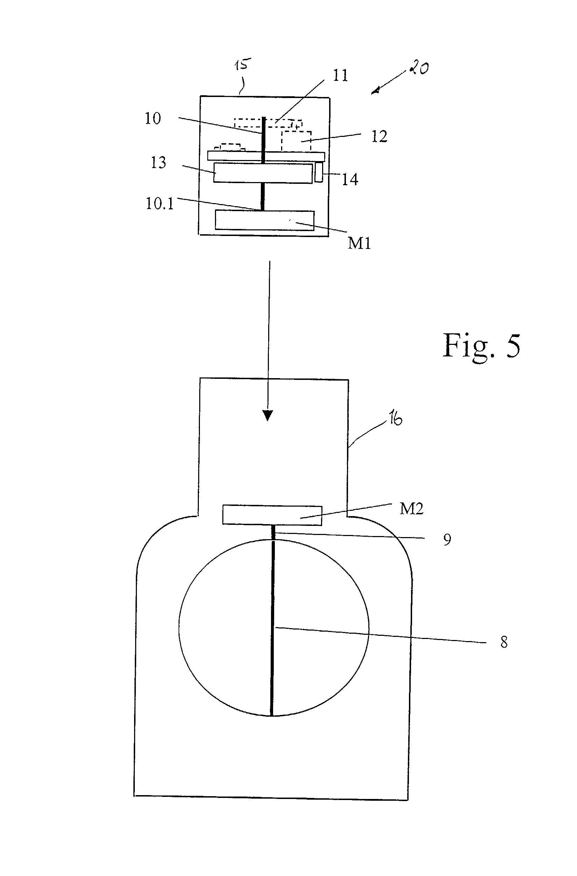

In einer weiteren vorteilhaften Ausführung nach Figur 5 kann ein Teil der Vorrichtung 1 zusammen mit der Sensorik 7 sowie einer nicht weiter dargestellten Elektronik , der antreibenden Welle 10, dem Zahnrad 11 und dem Motor 12 als Modul 20 gefertigt und somit leicht austauschbar gestaltet sein. Dazu befinden sich die vorgenannten Teile in einem gemeinsamen Gehäuse 15. Dieses wird dann im Stutzen 16 der Drosselklappe 8 eingesetzt. Das Modul 20 selbst ist über nicht näher dargestellte elektrische Anschlüsse mit der Elektronik der Kraftfahrzeuges in bekannter Art und Weise verbunden.

Des weiteren ist die Verwendung der vorgenannten Vorrichtung 1 nicht auf das Ausführungsbeispiel Drosselklappe begrenzt. Vielmehr findet die Vorrichtung 1 überall dort Verwendung bzw. Einsatz, wo eine stirnseitige berührungslose Übertragung von Dreh- und/oder Drehantriebsbewegungen erfolgen soll.

## Patentansprüche

1. Vorrichtung zur berührungslosen Übertragung von Drehbewegungen , bestehend aus einer magnetischen Kupplung, welche zwei magnetische Kupplungsglieder aufweist, die durch einen Spalt voneinander mechanisch entkoppelt sind, **dadurch gekennzeichnet, daß**
- die beiden magnetischen Kupplungsglieder zwei segmentiert polarisierte Magnete (M1, M2) sind,
- die jeweils an den stirnseitigen, zueinander weisenden Ende (3.1, 4.1, 9.1, 10.1) von die Drehbewegung übertragenden / aufnehmenden Mitteln (3, 4, 9, 10) direkt angebracht sind.

2. Vorrichtung nach Anspruch 1, **dadurch gekennzeichnet, daß** die Magnete (M1, M2) im stirnseitigen Bereich (b) polarisiert sind.

3. Vorrichtung nach Anspruch 1 oder 2, **dadurch gekennzeichnet, daß** die Magnete (M1, M2) als Rund- und/oder Ringmagnete ausgeführt sind.

4. Vorrichtung nach einem der Ansprüche 1 bis 3, **dadurch gekennzeichnet, daß** die Mittel (3, 4, 9, 10) Wellen oder Achsen sind.

5. Vorrichtung nach einem der Ansprüche 1 bis 4, **dadurch gekennzeichnet, daß** der Spalt (2) als ein Luftspalt ausgeführt ist.

6. Vorrichtung nach einem der Ansprüche 1 bis 5, **dadurch gekennzeichnet, daß** sich im Spalt (2) Kunststoff befindet.

7. Vorrichtung nach einem der Ansprüche 1 bis 6, **dadurch gekennzeichnet, daß** der Magnetwerkstoff Neodym ist.

8. Vorrichtung nach einem der Ansprüche 1 bis 7, **dadurch gekennzeichnet, daß** zusätzlich eine Sensorik (7) verstellt wird.

9. Vorrichtung nach Anspruch 8, **dadurch gekennzeichnet, daß** die Sensorik (7) aus einem Potentiometer mit Schleiferabgriff oder einem Magnet (13) mit einem von diesem beabstandeten magnetfeldsensitiven Sensor (14) besteht, wobei das Potentiometer bzw. der Magnet (13) an einem der Mittel (9, 10) befestigt sind.

10. Vorrichtung nach einem der vorgenannten Ansprüche, **dadurch gekennzeichnet, daß** die Sensorik (7), die Welle (10), das Zahnrad (11) und der Motor (12) in einem gemeinsamen Gehäuse (15) integriert und als Modul (20) aufgebaut sind.
